# EUROPEAN PATENT APPLICATION

(11) **EP 4 438 752 A1**
(43) Date of publication of application: **02.10.2024**
(21) Application number: 23164507.8
(22) Date of filing: 28.03.2023
(51) Int. Cl.: C22C 1/04, B33Y 70/00, C22C 21/00

(54) **ALUMINIUM ALLOY**

(71) Applicant: GF Casting Solutions AG, 8201 Schaffhausen (CH)
(72) Inventor: Wierschke, Sebastian, 78259 Mühlhausen-Ehingen (DE); Salvisberg, Marco, 4912 Arwangen (CH); Colombo, Paolo, 23845 Costa Masnaga (IT); Monti, Chiara, 8051 Zürich (CH); Papis, Konrad, 8610 Uster (CH); Turani, Matteo, 9008 St. Gallen (CH); Spierings, Adriaan, 9300 Wittenbach (CH); Bambach, Markus, 8006 Zürich (CH)
(74) Representative: Fenner, Seraina

(57) **Abstract**

Aluminum alloy for additive manufacturing in form of powder containing the following alloy components:
from 1 to 6% by weight of titanium,
from 0.05 to 2% by weight of iron
from 0.5 to 2.5% by weight of chromium
and as balance aluminum and production-related impurities.

## Description

The invention relates to an aluminum alloy for additive manufacturing in form of powder.

In the state of the art, several high-strength alloys are known, while these are mostly from the 4xxx or 5xxx Al-series, and where the strengthening potential is achieved using Mg as an alloying element for precipitation hardening in a subsequent heat treatment. However, these alloys are not an ideal solution for the use in additive manufacturing because, e.g. among other things, the magnesium tends to evaporate during additive processing. This results in a reduced process stability and lower material quality, and a reduced hardening potential due to the loss of Mg. Furthermore, other disadvantages of such traditional Al-alloys is their anisotropic mechanical behavior as a result of their microstructure, and driven by the specific processing conditions and alloying concept.

DE 10 2020 131 823 A1 discloses an aluminum alloy for additive manufacturing. The alloy contains scandium and zirconium, whereby an increased solid solution formation is to take place and, in addition, the high-required strength is to be achieved with an obligatory subsequent heat treatment.

The disadvantage is that scandium and zirconium are very expensive to purchase and are elements that are critical in demand sourcing due to the sustainability aspects. In addition, a subsequent heat treatment is usually necessary to achieve the required strength.

Various aluminium alloys for additive manufacturing are also marketed by Constellium, APWorks, EOS and Elementum 3D, and others, including alloys from the 2xxx, 4xxx and 5xxx series. However, in order to achieve the yield strength of a high-strength aluminum alloy, these alloys must have a subsequent heat treatment, which in turn reduces the economic viability of the alloys.

It is the object of the invention to propose a high-strength aluminum alloy, which is tailored for the additive manufacturing and is economical and sustainable to produce, and offers a more robust additive manufacturing processing compared to traditional alloys used in additive manufacturing.

This object is achieved according to the invention in that the aluminum alloy for additive manufacturing in form of powder containing the following alloy components: from 1 to 6% by weight of titanium, from 0.05 to 2% by weight of iron, from 0.5 to 1.5% by weight of chromium and as balance aluminum and production-related impurities.

These high titanium, chromium and iron contents that are present at a total weight concentration that exceeds equilibrium solubility in aluminum are especially applicable to aluminum alloys used in additive manufacturing. Due to the melting with the laser during the LPBF (Laser Power Bed Fusion) process and the very rapid cooling, as the aluminum alloy is only applied in thin layers, the heat can flow downwards to the massive built platform and previously built structures. Due to this rapid cooling and solidification, alloying elements can be kept in solid solution, and segregation of the alloying elements can be avoided.

Due to the specific composition of the inventive aluminum alloy, the tendency of the alloy to anisotropy can be significantly reduced to about half of the anisotropy value of competing high-strength alloys (e.g. Scalmalloy) respectively to about 1/10 of 4XXX alloys.

The high titanium content of 1 to 6% by weight in the alloy brings the advantage of high-temperature metastable cubic Al₃Ti_L1₂ and stable tetragonal Al3Ti_D0₂₂ primary precipitates, i.e. hardening is achieved by the effect of grain refinement.

Another advantage of titanium over magnesium in a main component alloy is that titanium brings a high process stability when used in additive manufacturing. This is due to the fact that the melting process in the LPBF process results in a more stable melt pool compared to a magnesium-containing aluminum alloy as there is also no magnesium evaporation and thus no disturbing vapors which decrease the quality of the incident laser beam.

As mentioned above, the high content of 0.5 to 1.5% by weight of chromium in the additive manufacturing process brings the advantages of high solid solution formation via sub-sequent precipitation of particles for further strengthening.

The contained iron content of 0.05 to 2% by weight improves the high temperature performance by high temperature stable intermetallic Fe-containing precipitates, which also contribute to a fine-grained microstructure.

Preferably, the aluminum alloy contains from 2 to 4.5% by weight of titanium.

Preferably, the inventive aluminum alloy contains from 2.5 to 4% by weight of titanium. Both of the aforementioned possible weight ranges of the titanium in the invented aluminum alloy bring with them the advantages mentioned above.

Preferably, the invented aluminum alloy contains from 0.05 to 5% by weight of copper.

Preferably, the aluminum alloy contains from 1.5 to 2.5% by weight of copper.

Due to the copper content, a precipitation hardening is achievable in a possible subsequent heat treatment in order to additionally increase the strength.

Preferably, the aluminum alloy contains from 1 to 2% by weight of chromium. Preferably, in that the aluminum alloy contains from 0.1 to 1.5% by weight of iron.

Preferably, the aluminum alloy contains one or more elements of < 0.3 weight % manganese, < 0.5 weight % silicon, <0.5 weight % magnesium, and/or < 0.5 weight % zinc, and a total weight % of one or more of these elements < 1 weight %. The inclusion of the aforementioned elements has the advantage that they can come from recycled scrap material and can be included in the alloy, which supports the idea of sustainability in addition to economic efficiency.

Preferably, the aluminum alloy is free from scandium, zirconium and rare earth elements. As these elements occur rarely, they are expensive and environmentally harmful to procure, which reduces the economic viability of an alloy and increases its negative impact on the environment.

Despite the avoidance of scandium, zirconium and rare earths, the parts produced by the additive manufacturing process with the alloy according to the invention are insensitive to hot cracking. This is obtained by a) absence of magnesium as alloying element and b) by adding titanium to promote grain refining. This leads to either a much more robust process with a more stable melt pool, and the reduction of hot cracking risk. Thus, the alloy according to the invention can be processed faster (up to ~ 50% higher build rate vs. Scalmalloy, even higher vs. AlSi10Mg). This further advantage increases the economic efficiency of the invention.

It is advantageous if the layer thickness in additive manufacturing by the LPBF process is at least 25µm thick.

Preferably, the structure of the inventive aluminum alloy consists of spherical particles, preferably with an average particle size from 15 to 75µm. Particularly preferably, the particle size distribution parameter d₅₀ lies in a range between 25-50µm.

The aluminum alloy having preferably an increased yield strength YS_{0.2} > 300 MPa in the as-processed condition, and an elongation at fracture A > 5%. These mechanical properties are far above the range of HPDC cast high-strength aluminum alloys, they are similar to the level of wrought alloys or additive manufactured aluminum alloys with expensive alloying elements.

Preferably, the yield strength YS_{0.2} > 300 MPa and the elongation at failure A > 5% of the aluminum alloy is achieved without additional heat treatment. The aluminum alloy according to the invention thus has the above-mentioned strength and elongation values directly after having been produced by the additive manufacturing process.

It is the task of the invention to use the aluminum alloy of the invention for the additive manufacturing of parts. The advantage is that lightweight components with high strength values can be produced in the same way or even better, e.g. reduction of wall-thickness and weight than parts produced by a casting process. In addition, no molds are required, which means that small series can also be produced economically.

Preferably such parts are used in the field of aerospace, vehicle construction and energy technology.

All possible embodiments can be freely combined with one another.

Some examples of the invention are listed, the invention not being restricted to only these examples.

Some examples of samples have been manufactured by additive manufacturing with the following aluminum alloy compositions Alloy A- Alloy E.

| | | Alloy A | Alloy B | Alloy C | Alloy D | Alloy E |
|---|---|---|---|---|---|---|
| Titanium (Ti) [% by weight] | | 2.53 | 2.91 | 3.07 | 3.8 | 5.5 |
| Iron (Fe) [% by weight] | | 1.19 | 1.29 | 0.21 | 0.56 | 0.15 |
| Chromium (Cr) [% by weight] | | 2.22 | 1.23 | 1.17 | 1.91 | 0.55 |
| Copper (Cu) [% by weight] | | 0 | 0.01 | 2.44 | 1.52 | 3.5 |
| Manganese (Mn) [% by weight] | a total weight % of one or more of these elements < 1 weight %. | - | - | - | 0.1 | - |
| Silicon (Si) [% by weight] | | 0.31 | 0.17 | 0.24 | - | 0.1 |
| Magnesium (Mg) [% by weight] | | - | - | - | 0.35 | 0.15 |
| Zinc (Zn) [% by weight] | | - | - | - | - | 0.38 |
| as balance aluminum and further production-related impurities | | | | | | |

In the following table the determined properties of the different aluminum alloys listed in the table above which were produced as additive manufactured parts are listed. It should be emphasized that the values of the samples were obtained without any additional heat treatment.

| | | Alloy A | Alloy B | Alloy C | Alloy D | Alloy E |
|---|---|---|---|---|---|---|
| Achieved LPBF build rate per laser spot | [cm³/h] | 31.2 | 25.1 | 31.2 | 25.1 | 25.1 |
| Hardness | [HV1] | 118 | 121 | 121 | 119 | 125 |
| Yield strength YS_{0.2} | [MPa] | 338 | 352 | 342 | 335 | 360 |
| Ultimate tensile strength | [MPa] | 350 | 354 | 371 | 345 | 365 |
| Work hardening | [MPa] | ∼ 10 | - | ∼ 30 | - | - |
| Elongation at failure A | [%] | 1.0 | 1.4 | 9.1 | 1.3 | 1.0 |
| Tensile YS anisotropy | [%] | 1.1 | 1.2 | 0.9 | 1.0 | 1.0 |
| Compressive yield strength (250° C) | [MPa] | 240.0 | 267.0 | 214.0 | 240.0 | 230.0 |

The table shows that the samples of aluminum alloys A-E have an elongation at fracture A with simultaneous tensile yield strength YS_{0.2} and this without any heat treatment. Of course, the parts made from the aluminum alloys of the invention using the additive manufacturing process can also be subjected to heat treatment, which would further improve the values, especially if copper is contained in the aluminum alloy according to the invention.

The above-mentioned aluminum alloys enable the additive manufacturing process to be used for any parts. These alloys are also preferably used in the aerospace, automotive and energy technology sectors, where lightweight components with very high strength play an important role.

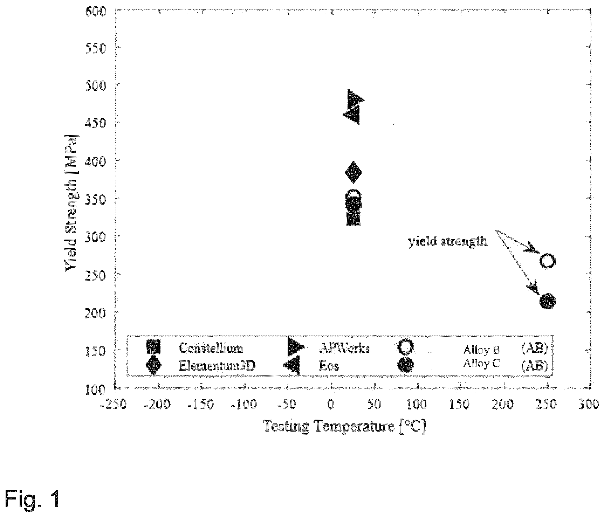

Fig. 1 shows a diagram of yield strength YS_{0.2} form different aluminum alloys.

The diagram in Fig. 1 shows the yield strength YS_{0.2} of materials for additive manufacturing that are known from the prior art and are commercially available on the market and two of the aluminum alloys according to the invention listed in the table above.

It can be seen that the materials for additive manufacturing according to the invention shown with round symbols Alloy B and Alloy C have a yield strength YS_{0.2} at room temperature of approx. 330 to 350MPa without heat treatment ("AB" means as-built). The materials known from the state of the art produced by Constellium, APWorks, EOS and Elementum 3D, which are shown with square symbols, have a yield strength YS_{0.2} in the range of approx. 320 to 480 MPa, but only with a subsequent heat treatment.

In addition, the aluminum alloy of the invention ensures a yield strength YS_{0.2} of approx. 220-260 MPa even in the temperature range of 250 °C, where other aluminum alloys usually show softening and therefore a critical drop in strength, e.g. AlSi10Mg down to <150 MPa.

## Claims

1. Aluminum alloy for additive manufacturing in form of powder containing the following alloy components:
from 1 to 6% by weight of titanium,
from 0.05 to 2% by weight of iron
from 0.5 to 2.5% by weight of chromium
and as balance aluminum and production-related impurities.

2. Aluminum alloy according to Claim 1, **characterized in that** the aluminum alloy contains from 2 to 4.5% by weight of titanium.

3. Aluminum alloy according to Claim 1, **characterized in that** the aluminum alloy contains from 2.5 to 4% by weight of titanium.

4. Aluminum alloy according to Claim 1, **characterized in that** the aluminum alloy contains from 0.05 to 5% by weight of copper.

5. Aluminum alloy according to Claim 1, **characterized in that** the aluminum alloy contains from 1.5 to 2.5% by weight of copper.

6. Aluminum alloy according to Claim 1, **characterized in that** the aluminum alloy contains from 1 to 2% by weight of chromium.

7. Aluminum alloy according to Claim 1, **characterized in that** the aluminum alloy contains from 0.1 to 1.5% by weight of iron.

8. Aluminum alloy according to Claim 1, **characterized in that** the aluminum alloy contains one or more elements of < 0.3 weight % manganese, < 0.5 weight % silicon, <0.5 weight % magnesium, and/or < 0.5 weight % zinc, and a total weight % of one or more of these elements < 1 weight %.

9. Aluminum alloy according to Claim 1, **characterized in that** the aluminum alloy is free from scandium, zirconium and rare earth elements.

10. Aluminum alloy according to Claim 1, **characterized in that** consists of spherical particles, preferably with an average particle size from 15 to 75µm.

11. Aluminum alloy according to Claim 1, **characterized in that** the aluminum alloy having increased yield strength YS_{0.2} > 300 MPa in the as-processed condition and an elongation at failure A > 5%.

12. Aluminum alloy according to Claim 11, **characterized in that** the yield strength YS_{0.2} > 300 MPa and the elongation at failure A > 5% of the aluminum alloy is achieved without additional heat treatment.

13. Use of the aluminum alloy according to any of claims 1 to 13 for the additive manufacturing of parts, preferably in the field of aerospace, vehicle construction and energy technology.
